# EUROPÄISCHE PATENTSCHRIFT

(11) **EP 3 418 171 B1**
(45) Veröffentlichungstag und Bekanntmachung des Hinweises auf die Patenterteilung: **12.01.2022**
(21) Anmeldenummer: 18178779.7
(22) Anmeldetag: 20.06.2018
(51) Int. Cl.: B62K 3/04, B62K 3/08

(54) **FAHRADRAHMEN UND FAHRRAD, INSBESONDERE ELEKTROFAHRRAD**
BICYCLE FRAME AND BICYCLE, IN PARTICULAR ELECTRIC BICYCLE
CADRE DE BICYCLETTE ET BICYCLETTE, EN PARTICULIER BICYCLETTE ÉLECTRIQUE

(30) Priorität: 20.06.2017 DE 102017210267
(43) Veröffentlichungstag der Anmeldung: 26.12.2018
(73) Patentinhaber: Biketec AG, 4950 Huttwil (CH)
(72) Erfinder: Suter, Philipp, 6032 Emmen (CH); Fuchs, Benjamin, 83059 Kolbermoor (DE); Afzal, Omar, 81379 München (DE); Wölk, Timo, 83730 Fischbachau (DE); Durdevic, Ivica, 6146 Grossdietwil (CH)
(74) Vertreter: Isarpatent

(56) Entgegenhaltungen:
- EP-A1- 3 118 096
- DE-A1-102010 035 793
- FR-A- 389 128
- FR-A- 423 339
- FR-A- 557 451
- US-A- 5 356 165
- US-A- 5 913 529
- US-A- 6 024 371

## Beschreibung

Die vorliegende Erfindung betrifft einen Fahrradrahmen gemäß dem Oberbegriff des Anspruchs 1 und ein Fahrrad gemäß dem Oberbegriff des Anspruchs 13.

Fahrräder und insbesondere Elektrofahrräder, beispielsweise Pedelecs oder E-Bikes, erfreuen sich großer Beliebtheit. Für unterschiedliche Einsatzfelder sind besonders geeignete Fahrradtypen verfügbar. Hierzu gehören u.a. für den Freizeiteinsatz oder den Weg zur Arbeit auf der Straße oder im leichten Gelände optimierte Fahrräder (bspw. Citybikes oder Tourenbikes) und die für den Einsatz im Gelände und speziell auch bergigem Gelände entwickelten E-Mountainbikes (E-MTB) in verschiedenen Ausführungen. Elektrofahrräder bieten die Möglichkeit ohne Überbeanspruchung des Fahrers den Einsatzradius zu vergrößern und die durchschnittliche Fahrgeschwindigkeit zu erhöhen.

Aus dem Stand der Technik sind Elektrofahrräder bekannt, welche an dem Fahrradrahmen montierte Energiespeicher, sogenannte Batteriepacks/Akkupacks aufweisen. Die Batteriepacks sind hierbei in den Fahrradrahmen einsetzbar oder umgreifen diesen abschnittsweise. In den Fahrradrahmen einsetzbare Lösungen führen zu einer verringerten Steifigkeit in diesem Bereich, so dass spezielle konstruktive Verstärkungen des Rahmens erforderlich sind. Aufgrund des in den Rahmenrohren verfügbaren geringen Bauraums sind herkömmliche Konzepte auch in der Batterieleistung eingeschränkt. Ferner sind Rahmenrohre mit komplexen Geometrien fertigungstechnisch aufwendig und daher kostenintensiv. Unter optischen Aspekten können derartige Elektrofahrräder insbesondere den Ansprüchen eines Lifestyle-betonten, sportlich ambitionierten Fahrers häufig nicht gerecht werden.

Das Stand der Technik Dokument US 5 356 165 A offenbart einen Fahrradrahmen und Merkmale, die dem Oberbegriff von Anspruch 1 entsprechen.

US 5 356 165 A beispielsweise beschreibt ein Fahrrad, umfassend einen Vorderrahmen mit einer mit einem Vorderrad gekoppelten Lenkanordnung, einem Sitz zum Halten eines Fahrers, einem zwischen dem Sitz und der Lenkanordnung befestigten Oberrohr, einem an dem Oberrohr befestigten und sich von diesem nach vorne und unten erstreckenden Stützrohr, einer zwischen dem Stützrohr und der Lenkanordnung befestigten Schwenkplatte mit einer Vielzahl von durch diese hindurch verlaufenden Öffnungen.

Der Erfindung liegt daher die Aufgabe zugrunde, ein neuartiges Fahrradkonzept bereitzustellen, welches den Ansprüchen sportlich und Lifestyle-orientierter Radfahrer in Übereinstimmung genügt.

Diese Aufgabe wird durch einen Fahrradrahmen mit der Merkmalskombination des Anspruchs 1 sowie ein Fahrrad, insbesondere ein Elektrofahrrad, mit der Merkmalskombination des Anspruchs 13 gelöst.

Ein erfindungsgemäßer Fahrradrahmen, insbesondere für ein Elektrofahrrad, weist zumindest ein Oberrohr, mindestens ein Unterrohr und ein Steuerrohr auf. Erfindungsgemäß sind Oberrohr, Unterrohr und das Steuerrohr mittels eines Verbindungsteils miteinander verbunden. Dadurch kann der Rahmen ein langes, vorzugsweise gerades Unterrohr mit relativ großem Querschnitt aufweisen, wobei das Verbindungsteil den Querschnitt des breiten Unterrohrs hin zum schmalen Oberrohr auf kurzem Weg besonders vorteilhaft verringert. Das Unterrohr kann dadurch zur Aufnahme eines langen Energiespeichers mit hoher Speicherkapazität dienen. Ferner hat ein Unterrohr mit großem Querschnitt ein sehr günstiges Steifigkeitsverhalten. Dadurch kann der Rahmen einen technisch und optisch höchsten Ansprüchen genügenden Verlauf aufweisen. Das Design wirkt ansprechend markenbetont. Das erfindungsgemäße Konzept wird daher auch den Ansprüchen eines lifestyle betonten, sportlich ambitionierten Fahrers gerecht.

Als besonders vorteilhaft hat es sich erwiesen, wenn das Verbindungsteil als vorzugsweise einteiliges Verbindungsrohr ausgebildet ist. Dieses Verbindungsteil wird oben am Unterrohr angesetzt, insbesondere angeschweißt, und stellt die Verbindung zu Ober- und Steuerrohr her.

Erfindungsgemäß weist das Verbindungsteil einen mit dem Unterrohr verbundenen Mittenabschnitt, einen vorderen Verbindungsschenkel und einen hinteren Verbindungsschenkel auf. Der Mittenabschnitt ist vorzugsweise mittig zwischen den Verbindungsschenkeln ausgebildet. Das Verbindungsteil ist fertigungstechnisch und optisch besonders vorteilhaft einstückig ausgebildet.

Der Mittenabschnitt ist erfindungsgemäß mit dem Unterrohr verbunden, so dass sich ein kompakter, hochfester Rahmenaufbau ergibt.

Erfindungsgemäß sind die Verbindungsschenkel des Verbindungsteils relativ zu dem Unterrohr etwa V-förmig angeordnet sind. Das Verbindungsteil ist vorzugsweise einstückig etwa V-förmig ausgebildet. Hierbei wird eine äußerst kompakte, homogene Rahmenform erreicht, welche die Festigkeitserfordernisse formschön erfüllt. Besonders vorteilhaft ist bei einer Verwendung des Rahmens bei einem Elektrofahrrad das erwähnte besonders lange, gerade Batteriepack mit hoher Speicherkapazität.

Die beiden Verbindungsschenkel sind bei einer bevorzugten Ausführungsvariante des Rahmens etwa gleich lang ausgebildet.

Vorzugsweise weisen die Verbindungsschenkel eine Länge von etwa 10 bis 100 mm auf. Der optische Gesamteindruck ist ansprechend homogen.

Bei einem bevorzugten Rahmenkonzept weist der vordere Verbindungsschenkel eine Länge von etwa 15 mm bis 75 mm auf. Dadurch wird eine optisch besonders ansprechende Geometrie mit hoher Festigkeit erreicht.

Der hintere Verbindungsschenkel hat vorzugsweise eine Länge von etwa 20 mm bis 43 mm. Diese Dimensionierung ist formschön bei hoher Festigkeit.

Der vordere Verbindungsschenkel schließt vorteilhafterweise einen Winkel von etwa 120 bis 150 Grad zum Unterrohr ein.

Ein bevorzugter Fahrradrahmen weist einen hinteren Verbindungsschenkel auf, welcher einen Winkel von etwa 90 bis 110 Grad zum Unterrohr einschließt.

Gemäß einer vorteilhaften Variante der Erfindung schließen die Verbindungsschenkel einen Winkel von etwa 140 bis 160 Grad, vorzugsweise von etwa 150 Grad zueinander ein.

Beispielsweise verläuft der vordere Verbindungsschenkel etwa horizontal oder in einem Winkel von etwa 5 bis 30 Grad zu einer horizontalen Ebene nach oben geneigt.

Gemäß einer alternativen, beispielhaften Variante verläuft der vordere Verbindungsschenkel etwa horizontal oder in einem Winkel von etwa 5 bis 30 Grad zu einer horizontalen Ebene nach unten geneigt.

Der hintere Verbindungsschenkel erstreckt sich bei einer beispielhaften Variante in einem Winkel von etwa 5 bis 30 Grad zu einer horizontalen Ebene nach oben geneigt.

Bei einer bevorzugten Ausführungsform ist das Oberrohr im Bereich des hinteren Verbindungsschenkels nach oben gekrümmt ausgebildet. Die Krümmung kann ein Knick sein. Der Krümmungsbereich kann eine Abrundung aufweisen.

Das Unterrohr des erfindungsgemäßen Rahmens weist einen größeren Querschnitt als das Oberrohr auf.

Erfindungsgemäß weist das Unterrohr zumindest einen Rahmenabschnitt zur abnehmbaren Halterung mindestens eines separaten Energiespeichers insbesondere eines Batteriepacks, auf. Der Rahmenabschnitt kann zur Halterung des Energiespeichers etwa mittig des Unterrohrs zwischen Tretlager und Lenkkopflager vorgesehen sein. Bei einer Variante mit Tretlagerantrieb (bspw. einer Motor-Getriebe-Einheit) kann sich der Energiespeicher bis in einen Bereich der Tretlagerantriebsaufnahme hin erstrecken.

Weiterhin kann das Unterrohr beispielsweise eine größere Breite als das Oberrohr aufweisen. Die größere Breite des Unterrohrs hin zum Oberrohr wird mittels des Verbindungsteils auf relativ kurzem Raum vorteilhaft verringert.

Das Verbindungsteil weist beispielsweise an seiner Oberseite zumindest eine Öffnung zur Durchführung von Steuerelementen oder dgl. auf.

Das Oberrohr kann beispielhaft einen etwa rechteckigen Querschnitt aufweisen. Vorzugsweise sind die Eckbereiche abgerundet.

Das Unterrohr kann einen etwa rechteckigen Querschnitt aufweisen, wobei die Längskanten vorzugsweise mit Schrägflächen versehen sind.

Erfindungsgemäß weist zumindest einer der Verbindungschenkel einen sich zum Oberrohr bzw. Steuerrohr hin verjüngenden Querschnitt auf. Der Querschnitt wird vorzugsweise stetig verringert.

Die Längskanten des Verbindungsteils können mit Schrägflächen versehen sein. Dadurch ergibt sich beispielsweise ein achteckiges Profil.

Das Unterrohr hat beispielhafterweise einen im Wesentlichen geraden Verlauf. Vorzugsweise hat das Unterrohr einen im Wesentlichen konstanten Querschnitt.

Vorzugsweise ist das Verbindungsteil als Hydroforming-Bauteil ausgebildet. Als besonders vorteilhaft hat es sich hierbei erwiesen, wenn das Verbindungsteil einteilig ist. Aufgrund des Hydroforming-Verfahrens kann das Verbindungsteil eine komplexe Geometrie aufweisen und optimal die Übergange zu Oberrohr, Unterrohr und Steuerrohr auf kleinem Bauraum herstellen.

Bei einer alternativ bevorzugten Ausführungsvariante weist das Verbindungsteil zumindest ein Hydroforming-Bauteil auf.

Als besonders vorteilhaft hat es sich erwiesen, wenn das Unterrohr als Extrusionsrohr ausgebildet ist. Ein Extrusionsrohr ist vorzugsweise aus Aluminium endlos und daher kostengünstig herstellbar. Bei einem Unterrohr mit Akkuaufnahme kann dieses abschnittsweise etwa U-förmig, insbesondere gefräst, ausgebildet sein.

Der Energiespeicher ist bei einer bevorzugten Ausführungsform den Querschnitt des Unterrohrs ergänzend unten oder oben angeordnet. Rahmenabschnitt und Batteriepack können abgerundete oder facettierte Eckenbereiche aufweisen.

Bei einem beispielhaften Fahrradrahmen ist das Batteriepack oberhalb des Rahmenabschnitts angeordnet. Dadurch ist das Batteriepack vom Benutzer leicht von oben einsetz- und im Rahmen verriegelbar. Das heißt, das Batteriepack ist vorzugsweise von oben auf den Rahmenabschnitt aufgesetzt. Mit dieser Anordnung wird ferner ein bestmöglicher Schutz des Batteriepacks vor Beschädigungen, beispielsweise durch Steinschlag oder Bodenberührungen, erreicht.

Bei einem alternativen, beispielhaften Fahrradrahmen ist das Batteriepack unterhalb des Rahmenabschnitts angeordnet. Dadurch ist das Batteriepack vom Benutzer leicht von unten einsetz- und im Rahmen verriegelbar. Mit dieser Anordnung wird ein möglichst langes Batteriepack erreicht.

Das erfindungsgemäße Fahrrad, vorzugsweise Elektrofahrrad, hat einen Fahrradrahmen mit zumindest einem Unterrohr, mindestens einem Oberrohr und einem Steuerrohr, wobei das Unterrohr, das Oberrohr und das Steuerrohr mittels eines Verbindungsteils verbunden sind. Das Elektrofahrrad hat dadurch einen optimierten Rahmenquerschnitt mit konstruktiv und ästhetisch besten Eigenschaften bei minimiertem Bauraumbedarf.

Die Erfindung kann universell bei allen Typen von Fahrrädern, insbesondere bei Mountainbikes (sowohl in Hardtail- oder Full-Suspension-Bauweise), aber auch bei anderen Fahrrädern, bspw. Straßenrad-Rahmen realisiert werden und somit letztlich ein Touren-, City- oder Cross-Rad oder andere moderne Fahrradtypen ergeben. Sie ermöglicht aufgrund der kompakten, formschönen Bauweise den Aufbau von Rädern, die weitgehend die Vorzüge eines klassischen Fahrrads und eines Elektrofahrrads in sich vereinen.

Da sich das erfindungsgemäße Fahrrad äußerlich kaum von sonstigen modern und sportlich gestalteten Rädern abhebt, wird die Konstruktion dem sportlichen und Lifestyle-Anspruch breiter Nutzergruppen gerecht. Die mögliche unauffällige Integration eines Elektroantriebkonzepts ist formschön.

Weitere bevorzugte Ausführungsformen sind Gegenstand der Unteransprüche.

Im Folgenden wird eine bevorzugte Ausführungsform der vorliegenden Erfindung unter Bezugnahme auf die beiliegenden Zeichnungen näher erläutert. Dabei zeigen die Zeichnungen im Einzelnen:
Figur 1 eine Seitenansicht eines erfindungsgemäßen Fahrradrahmens,
Figur 2 eine Detaildarstellung des Fahrradrahmens aus Figur 1 im Bereich des Verbindungsteils,
Figur 3 eine perspektivische Darstellung des Fahrradrahmens aus Figur 1,
Figur 4 eine Draufsicht von oben des Fahrradrahmens aus Figur 1 und
Figur 5 eine Vorderansicht des Fahrradrahmens aus Figur 1.

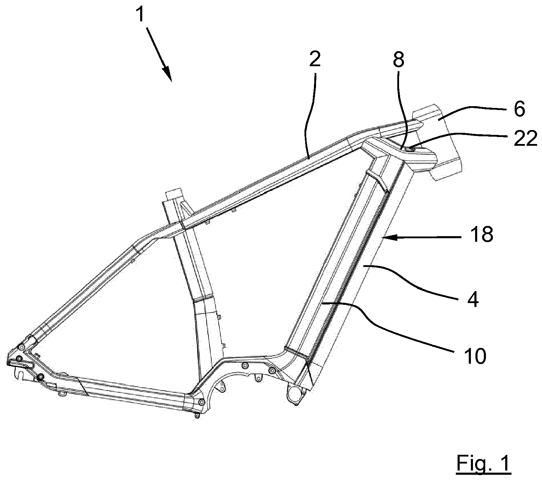

Figur 1 zeigt eine Seitenansicht eines exemplarisch als Diamantrahmen ausgebildeten erfindungsgemäßen Fahrradrahmens 1 mit einem Oberrohr 2, einem Unterrohr 4 und einem Steuerrohr 6. Erfindungsgemäß sind Oberrohr 2, Unterrohr 4 und das Steuerrohr 6 mittels eines Verbindungsteils 8 miteinander verbunden. Dadurch kann der Rahmen ein Unterrohr 4 mit relativ großem Querschnitt aufweisen, wobei das Verbindungsteil 8 den Querschnitt des breiten Unterrohrs 4 hin zum schmalen Oberrohr 2 auf kurzem Weg besonders vorteilhaft verringert. Das Unterrohr 4 dient zur Aufnahme eines langen Batteriepacks 10, welches von oben in einen etwa U-förmigen Ausschnitt des Unterrohrs 4 eingesetzt ist und den Querschnitt des Unterrohrs 4 formschön ergänzt. Dadurch ist das Batteriepack 10 vom Benutzer leicht von oben einsetz- und im Rahmen verriegelbar. Mit dieser Anordnung wird ein bestmöglicher Schutz des Batteriepacks vor Beschädigungen, beispielsweise durch Steinschlag oder Bodenberührungen, erreicht.

Das Unterrohr 4 ist aufgrund des Verbindungsteils 8 als endlos und daher besonders kostengünstig herstellbares Extrusionsrohr aus Aluminium ausgebildet.

Das Verbindungsteil 8 ist ein einteiliges Hydroforming-Bauteil ausgebildet als Verbindungsrohr, welches einen formschönen Übergang des geradlinigen, relativ breiten Unterrohrs 4 auf die Querschnitte des Ober- und Steuerrohrs 2, 6 ermöglicht. Dadurch weist der Rahmen 1 einen technisch und optisch höchsten Ansprüchen genügenden Verlauf auf. Das Design wirkt ansprechend markenbetont. Das erfindungsgemäße Konzept wird daher auch den Ansprüchen eines lifestyle betonten, sportlich ambitionierten Fahrers gerecht.

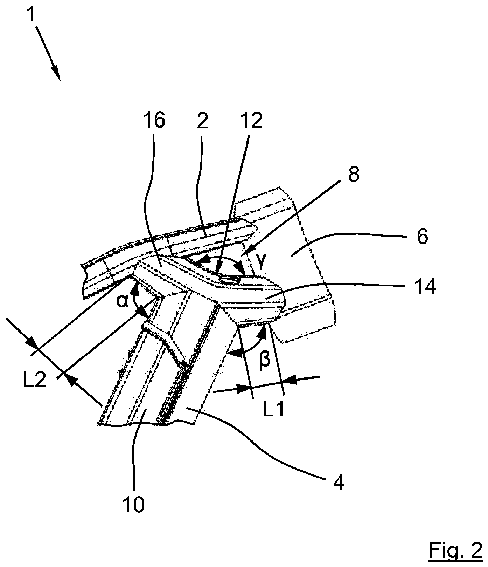

Gemäß Figur 2, welche eine Detaildarstellung des Rahmens 1 aus Figur 1 im Bereich des Verbindungsteils 8 zeigt, hat das Verbindungsteil 8 einen Mittenabschnitt 12, einen in Fahrtrichtung vorderen Verbindungsschenkel 14 und einen hinteren Verbindungsschenkel 16. Der Mittenabschnitt 12 ist etwa mittig zwischen den Verbindungsschenkeln 14, 16 angeordnet. Die beiden Verbindungsschenkel 14, 16 sind relativ zu dem Unterrohr 4 etwa V-förmig angeordnet. Das Verbindungsteil 8 ist fertigungstechnisch besonders vorteilhaft einstückig ausgebildet. Der Mittenabschnitt 12 ist mit dem oberen Endabschnitt des Unterrohrs 4 verschweißt, so dass sich ein kompakter, hochfester Rahmenaufbau ergibt. Insgesamt wird eine äußerst kompakte, homogene Rahmenform erreicht, welche die Festigkeitserfordernisse formschön erfüllt und ein Batteriepack 10 mit größtmöglicher Kapazität ermöglicht.

Der vordere Verbindungsschenkel 14 weist eine Länge L1 von etwa 23 mm auf. Der hintere Verbindungsschenkel 16 hat vorzugsweise eine Länge L2 von etwa 38 mm. Diese Dimensionierung ist formschön bei hoher Festigkeit.

Der vordere Verbindungsschenkel 14 schließt vorteilhafterweise einen Winkel β von etwa 122 Grad zum Unterrohr 4 ein. Der hintere Verbindungsschenkel 16 weist einen Winkel α von etwa 103 Grad zum Unterrohr 4 auf. Die beiden Verbindungsschenkel 14, 16 schließen einen Winkel γ von etwa 151 Grad zueinander ein. Der vordere Verbindungsschenkel 14 verläuft in einem Winkel von etwa 5 Grad zu einer horizontalen Ebene nach oben geneigt. Der hintere Verbindungsschenkel 16 erstreckt sich bei einer Ausführungsvariante in einem Winkel von etwa 30 Grad zu einer horizontalen Ebene nach oben geneigt.

Die Verbindungschenkel 14, 16 weisen jeweils einen sich zum Oberrohr 2 oder Steuerrohr 6 hin verjüngenden Querschnitt auf. Der Querschnitt ist im Wesentlichen stetig verringert.

Die Längskanten des Verbindungsteils 8 sind mit Schrägflächen versehen, so dass sich ein etwa achteckiges Profil ergibt.

Das Oberrohr 2 ist im Bereich des hinteren Verbindungsschenkels 16 nach oben gekrümmt ausgebildet. Die Krümmung kann wie dargestellt ein leichter Knick sein. Der Krümmungsbereich weist einen Krümmungsverlauf auf.

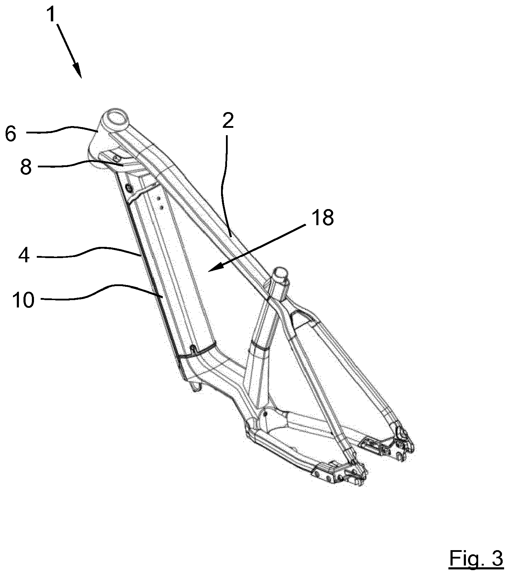

Wie neben Figur 1 auch Figur 3 entnehmbar ist, welche eine perspektivische Darstellung des Rahmens 1 aus Figur 1 zeigt, hat das Unterrohr 4 einen Rahmenabschnitt 18 zur abnehmbaren Halterung des Batteriepacks 10. Der Rahmenabschnitt 18 ist zur Halterung des Batteriepacks 10 etwa mittig des Unterrohrs 4 vorgesehen. Bei der dargestellten Variante mit Tretlagerantrieb (bspw. einer Motor-Getriebe-Einheit) erstreckt sich das Batteriepack 10 bis in einen Bereich der Tretlagerantriebsaufnahme. Besonders vorteilhaft ist bei einer Verwendung des Rahmens 1 bei einem Elektrofahrrad das nun ermöglichte besonders lange, gerade Batteriepack 10 mit hoher Speicherkapazität.

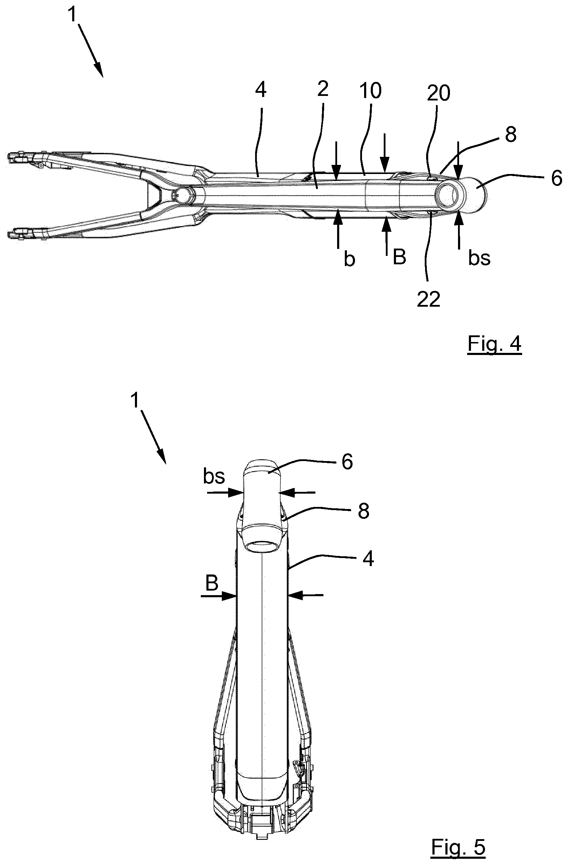

Gemäß Figur 4, welche eine Draufsicht von oben auf den Rahmen 1 aus Figur 1 zeigt, hat das Unterrohr 4 des erfindungsgemäßen Rahmens 1 eine größere Breite B, d. h. einen größeren Querschnitt als das Oberrohr 2 mit einer Breite b. Weiterhin weist das Unterrohr 4 eine größere Breite B als das Steuerrohr 6 mit Breite bs auf.

Dies ist auch aus Figur 5 ersichtlich, welche eine Vorderansicht des Rahmens aus Figur 1 zeigt. Die größere Breite des Unterrohrs 4 hin zum Steuerrohr 6 wird mittels des Verbindungsteils 8 auf relativ kurzem Raum verringert. Das Unterrohr 4 kann dadurch sehr lange und relativ breit sein, so dass ein großes Batteriepack 10 montierbar ist.

Das Oberrohr 2 hat einen etwa rechteckigen Querschnitt mit angerundeten, facettierten Eckbereichen. Das Unterrohr 4 weist einen etwa rechteckigen Querschnitt auf, wobei die Längskanten mit Schrägflächen versehen sind. Das Unterrohr 4 hat einen geraden Verlauf mit konstantem Querschnitt. Das Verbindungsteil weist an seiner Oberseite zwei Öffnungen 20, 22 zur Durchführung von Steuerelementen oder dgl. auf.

Die Erfindung kann universell bei allen Typen von Fahrrädern mit oder ohne Antrieb, insbesondere bei Mountainbikes (sowohl in Hardtail- oder Full-Suspension-Bauweise), aber auch bei anderen Fahrrädern, bspw. Straßenrad-Rahmen realisiert werden und somit letztlich ein Touren-, City- oder Cross-Rad oder andere moderne Fahrradtypen ergeben.

Die Ausführung der Erfindung ist nicht auf die in den Figuren gezeigten und oben erläuterten Beispiele beschränkt, sondern ebenso in einer Vielzahl von Abwandlungen eines Fachmanns möglich. Der Schutzumfang wird durch die Ansprüche definiert.

Offenbart ist ein Fahrradrahmen 1 mit zumindest einem Oberrohr 2, mindestens einem Unterrohr 4 und einem Steuerrohr 6, dadurch gekennzeichnet, dass das Oberrohr 2, das Unterrohr 4 und das Steuerrohr 6 mittels eines Verbindungsteils 8 verbunden sind. Ferner offenbart ist ein Fahrrad mit einem derartigen Fahrradrahmen 1.

### Bezugszeichenliste

- 1: Fahrradrahmen
- 2: Oberrohr
- 4: Unterrohr
- 6: Steuerrohr
- 8: Verbindungsteil
- 10: Batteriepack
- 12: Mittenabschnitt
- 14: vorderer Verbindungsschenkel
- 16: hinterer Verbindungsschenkel
- 18: Rahmenabschnitt
- 20: Öffnung
- 22: Öffnung

## Patentansprüche

1. Fahrradrahmen (1) mit zumindest einem Oberrohr (2), mindestens einem Unterrohr (4) und einem Steuerrohr (6), wobei das Oberrohr (2), das Unterrohr (4) und das Steuerrohr (6) mittels eines Verbindungsteils (8) verbunden sind, wobei das Verbindungsteil (8) einen mit dem Unterrohr (4) verbundenen Mittenabschnitt (12), einen vorderen Verbindungsschenkel (14) und einen hinteren Verbindungsschenkel (16) aufweist, und wobei die Verbindungsschenkel (14, 16) relativ zu dem Unterrohr (4) etwa V-förmig angeordnet sind, **gekennzeichnet durch** ein Unterrohr (2) mit einem größeren Querschnitt als das Oberrohr (2) und das Unterrohr (4) zur abnehmbaren Halterung mindestens eines separaten Energiespeichers insbesondere eines Batteriepacks (10), wobei der vordere Verbindungschenkel (14) einen sich zum Steuerrohr (6) hin verjüngenden Querschnitt und der hintere Verbindungsschenkel (16) einen sich zum Oberrohr (2) hin verjüngenden Querschnitt aufweist.

2. Fahrradrahmen nach Anspruch 1, wobei die beiden Verbindungsschenkel (14, 16) etwa gleich lang sind.

3. Fahrradrahmen nach einem der Ansprüche 1 oder 2, wobei die Verbindungsschenkel (14, 16) eine Länge L1, L2 von etwa 10 mm bis 100 mm aufweisen.

4. Fahrradrahmen nach einem der Ansprüche 1 bis 3, wobei der vordere Verbindungsschenkel (14) eine Länge L1 von etwa 15 mm bis 75 mm aufweist.

5. Fahrradrahmen nach einem der Ansprüche 1 bis 4, wobei der hintere Verbindungsschenkel (16) eine Länge L2 von etwa 20 mm bis 45 mm aufweist.

6. Fahrradrahmen nach einem der Ansprüche 1 bis 5, wobei der vordere Verbindungsschenkel (14) einen Winkel β von etwa 120 bis 150 Grad zum Unterrohr (4) einschließt.

7. Fahrradrahmen nach einem der Ansprüche 1 bis 6, wobei der hintere Verbindungsschenkel (16) einen Winkel α von etwa 90 bis 110 Grad zum Unterrohr (4) einschließt.

8. Fahrradrahmen nach einem der Ansprüche 1 bis 7, wobei die Verbindungsschenkel (14, 16) einen Winkel γ von etwa 140 bis 160 Grad, vorzugsweise etwa 150 Grad zueinander einschließen.

9. Fahrradrahmen nach einem der Ansprüche 1 bis 8, wobei das Oberrohr (2) im Bereich des hinteren Verbindungsschenkels (16) nach oben gekrümmt ausgebildet ist.

10. Fahrradrahmen nach einem der vorhergehenden Ansprüche, wobei das Verbindungsteil (8) als Hydroforming-Bauteil ausgebildet ist.

11. Fahrradrahmen nach einem der vorhergehenden Ansprüche, wobei das Unterrohr (4) als Extrusionsrohr ausgebildet ist.

12. Fahrradrahmen nach einem der vorhergehenden Ansprüche, wobei der Energiespeicher (10) unten oder oben den Querschnitt des Unterrohrs (4) ergänzend angeordnet ist.

13. Fahrrad, insbesondere Elektrofahrrad, aufweisend einen Fahrradrahmen (1) nach einem der vorhergehenden Ansprüche.

## Claims

1. Bicycle frame (1) having at least one upper tube (2), at least one lower tube (4) and a control tube (6), the upper tube (2), the lower tube (4) and the control tube (6) being interconnected by means of a connecting part (8), the connecting part (8) having a central portion (12) connected to the lower tube (4), a front connecting limb (14) and a rear connecting limb (16), and the connecting limbs (14, 16) being arranged approximately in a V shape relative to the relative to the lower tube (4), **characterised by** a lower tube (2) having a greater cross section than the upper tube (2) and the lower tube (4) for removable mounting of at least one separate energy store, in particular a battery pack (10), the front connecting limb (14) having a cross section which tapers towards the control tube (6), and the rear connecting limb (16) having a cross section which tapers towards the upper tube (2).

2. Bicycle frame according to claim 1, wherein the two connecting limbs (14, 16) are approximately equally long.

3. Bicycle frame according to either claim 1 or claim 2, wherein the connecting limbs (14, 16) are of a length L1, L2 of approximately 10 mm to 100 mm.

4. Bicycle frame according to any of claims 1 to 3, wherein the front connecting limb (14) is of a length L1 of approximately 15 mm to 75 mm.

5. Bicycle frame according to any of claims 1 to 4, wherein the rear connecting limb (16) is of a length L2 of approximately 20 mm to 45 mm.

6. Bicycle frame according to any of claims 1 to 5, wherein the front connecting limb (14) is at an angle β of approximately 120 to 150 degrees to the lower tube (4).

7. Bicycle frame according to any of claims 1 to 6, wherein the rear connecting limb (16) is at an angle α of approximately 90 to 110 degrees to the lower tube (4).

8. Bicycle frame according to any of claims 1 to 7, wherein the connecting limbs (14, 16) are at an angle γ of approximately 140 to 160 degrees, preferably approximately 150 degrees, to one another.

9. Bicycle frame according to any of claims 1 to 8, wherein the upper tube (2) is formed curved upwards in the region of the rear connecting limb (16).

10. Bicycle frame according to any of the preceding claims, wherein the connecting part (8) is formed as a hydroformed component.

11. Bicycle frame according to any of the preceding claims, wherein the lower tube (4) is formed as an extruded tube.

12. Bicycle frame according to any of the preceding claims, wherein the energy store (10) is arranged to complete the cross section of the lower tube (4) upwards or downwards.

13. Bicycle, in particular electric bicycle, having a bicycle frame (1) according to any of the preceding claims.

## Revendications

1. Cadre de bicyclette (1) comportant au moins un tube supérieur (2), au moins un tube inférieur (4) et un tube de direction (6), dans lequel le tube supérieur (2), le tube inférieur (4) et le tube de direction (6) sont reliés au moyen d'une pièce de liaison (8), dans lequel la pièce de liaison (8) présente une partie centrale (12) reliée au tube inférieur (4), une branche de liaison avant (14) et une branche de liaison arrière (16), et dans lequel les branches de liaison (14, 16) sont disposées approximativement en forme de V par rapport au tube inférieur (4),
**caractérisé par** un tube inférieur (2) ayant une section transversale plus grande que le tube supérieur (2) et le tube inférieur (4) pour maintenir de manière amovible au moins un dispositif de stockage d'énergie séparé, en particulier un bloc batterie (10), dans lequel la branche de liaison avant (14) présente une section transversale s'effilant vers le tube de direction (6) et la branche de liaison arrière (16) une section transversale s'effilant vers le tube supérieur (2).

2. Cadre de bicyclette selon la revendication 1, dans lequel les deux branches de liaison (14, 16) sont de longueur approximativement égale.

3. Cadre de bicyclette selon l'une des revendications 1 ou 2, dans lequel les branches de liaison (14, 16) ont une longueur L1, L2 d'environ 10 mm à 100 mm.

4. Cadre de bicyclette selon l'une des revendications 1 à 3, dans lequel la branche de liaison avant (14) présente une longueur L1 d'environ 15 mm à 75 mm.

5. Cadre de bicyclette selon l'une des revendications 1 à 4, dans lequel la branche de liaison arrière (16) présente une longueur L2 d'environ 20 mm à 45 mm.

6. Cadre de bicyclette selon l'une des revendications 1 à 5, dans lequel la branche de liaison avant (14) forme un angle β d'environ 120 à 150 degrés avec le tube inférieur (4).

7. Cadre de bicyclette selon l'une des revendications 1 à 6, dans lequel la branche de liaison arrière (16) forme un angle α d'environ 90 à 110 degrés avec le tube inférieur (4).

8. Cadre de bicyclette selon l'une des revendications 1 à 7, dans lequel les branches de liaison (14, 16) forment entre elles un angle γ d'environ 140 à 160 degrés, de préférence d'environ 150 degrés.

9. Cadre de bicyclette selon l'une des revendications 1 à 8, dans lequel le tube supérieur (2) est incurvé vers le haut dans la zone de la branche de liaison arrière (16).

10. Cadre de bicyclette selon l'une des revendications précédentes, dans lequel la pièce de liaison (8) est réalisée sous la forme d'un élément hydroformé.

11. Cadre de bicyclette selon l'une des revendications précédentes, dans lequel le tube inférieur (4) est réalisé sous la forme d'un tube extrudé.

12. Cadre de bicyclette selon l'une des revendications précédentes, dans lequel le dispositif de stockage d'énergie (10) est disposé en bas ou en haut de manière à compléter la section transversale du tube inférieur (4).

13. Bicyclette, en particulier bicyclette électrique, présentant un cadre de bicyclette (1) selon l'une des revendications précédentes.
